# EUROPEAN PATENT APPLICATION

(11) **EP 4 757 245 A1**
(43) Date of publication of application: **10.06.2026**
(21) Application number: 24218286.3
(22) Date of filing: 09.12.2024
(51) Int. Cl.: H04L 9/40

(54) **SYSTEM AND METHOD FOR PROTECTING A VEHICLE**

(71) Applicant: PlaxidityX Ltd., 5252171 Ramat Gan (IL)
(72) Inventor: Lavi, Oron, 5252171 Ramat Gan (IL); Bari-Ephraim, Yael, 5252171 Ramat Gan (IL)
(74) Representative: Aumovio Corporation

(57) **Abstract**

A system and method for protecting a vehicle from theft includes monitoring transmissions over an in-vehicle network; determining, based on at least two of the content of at least one message, electrical characteristics of the transmission of the message, and the context of the vehicle, that an unauthorized device is connected to the in-vehicle network and is used to perform at least one of: stealing the vehicle, and bypassing security or access system of the vehicle. A system or method includes performing at least one of: recording and reporting information related to the unauthorized component, preventing or mitigating an attack on the vehicle, and preventing theft or unauthorized use of the vehicle.

## Description

The present invention relates generally to protecting a vehicle. More specifically, the present invention relates to protecting a vehicle from unauthorized connection of a device to an in-vehicle network of the vehicle.

### BACKGROUND OF THE INVENTION

Modem vehicles include complex systems consisting of multiple components which are connected by in-vehicle communication networks, channels and interfaces. An attack on a vehicle may include connecting a unit or device to the in-vehicle network, in-vehicle communication bus or other in-vehicle communication channels. Accordingly, protecting a vehicle from malicious entities requires protecting the in-vehicle communication networks, buses or channels.

### SUMMARY OF THE INVENTION

An embodiment of the invention includes a method of protecting a vehicle from theft comprising monitoring transmissions over an in-vehicle network; determining, based on at least two of the content of at least one message, electrical characteristics of the transmission of the message, and the context of the vehicle, that an unauthorized device is connected to the in-vehicle network and is used to perform at least one of: stealing the vehicle, and bypassing security or access system of the vehicle; and performing at least one of: recording and reporting information related to the unauthorized component, preventing or mitigating an attack on the vehicle, and preventing theft or unauthorized use of the vehicle. A system comprising a data processing circuit can be configured to execute the method. A computer program comprising instructions which, when the program is executed by a computer, cause the computer to carry out the method.

A method can include calculating, based on electrical characteristics of transmissions over the in-vehicle network, a set of signatures for a respective set of components connected to the in-vehicle network; wherein determining an unauthorized component is connected to the in-vehicle network is based on relating electrical characteristics of a transmission to the set of signatures.

A method can include determining electrical characteristics of a transmission at least partially match electrical characteristics represented by a signature; and updating the signature according to the electrical characteristics of the transmission. The method can include creating a signature based on previously unseen electrical characteristics of one or more transmissions. Determining an unauthorized component is malicious can be based on a state of the vehicle.

Determining the unauthorized component is malicious can be based on examining messages sent by the unauthorized component and identifying operations the unauthorized component attempts to perform. A method can include preventing an unauthorized component from communicating over the network. A method can include controlling or activating a component in the vehicle to thus protect the vehicle from the unauthorized component.

A method can include, based on matching the content of a message with a signature of a component, determining one of: a message appearing to originate from the component was indeed sent by the component, and an unauthorized component is connected to the in-vehicle network. Signatures can be received from a server. An embodiment determines an unauthorized component is used to perform at least one of: coding a key, unlocking a door of the vehicle and starting the engine of the vehicle. An embodiment determines an unauthorized component is physically connected to the in-vehicle network.

Based on at least one of: a command, a configuration element, an event, and a state or context of a vehicle, an embodiment performs at least one of: authenticating the unauthorized component, ignoring the unauthorized component, removing a signature, creating a signature representing a new component, and calculating or recalculating a signature for a component.Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with the same label in all the figures in which they appear. A label labeling an icon representing a given feature of an embodiment of the disclosure in a figure may be used to reference the given feature. The dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system according to illustrative embodiments of the present invention;
Fig. 3 shows a system according to illustrative embodiments of the present invention;
Fig. 4A shows objects in a memory according to illustrative embodiments of the present invention;
Fig. 4B shows messages and metadata along a timeline according to illustrative embodiments of the present invention; and
Fig. 5 shows a flowchart of a method according to illustrative embodiments of the present invention.

### DETAILED DESCRIPTION

Embodiments of the invention provide and enable new ways of identifying, tracking, discovering or determining that an unauthorized device is connected to the in-vehicle network. More specifically, embodiments of the invention identify or determine that an unauthorized device is connected to an in-vehicle network and is used to bypass a security system of the vehicle in order to steal the vehicle or otherwise make unauthorized use of the vehicle.

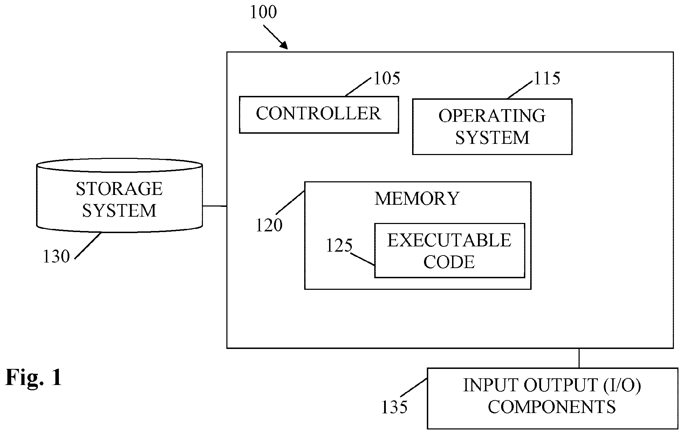

Reference is made to Fig. 1, showing a non-limiting, block diagram of a computing device or system 100 that may be used by, or included in, a system according to some embodiments of the present invention. For example, a theft prevention unit as further described herein may be or may include components of computing device 100.

In embodiments, computing device (or system) 100 includes a controller 105 that is a hardware controller. For example, computer hardware processor or hardware controller 105 can be, or can include a central processing unit processor (CPU), a field programmable gate array (FPGA) or other chip or any suitable computing or computational device. In some embodiments, computing system 100 includes a memory 120, an operating system (OS) 115, executable code 125, a storage system 130, and I/O components 135 which may be detachably connected to computing device 100. In some embodiments, controller 105 (or one or more controllers or processors, possibly across multiple units or devices) is configured (e.g., by executing software or code) to carry out methods described herein, and/or to execute or act as the various modules, units, etc., for example by executing software or by using dedicated circuitry. More than one computing device 100 may be included in, and one or more computing devices 100 may be, may function, or may act as the components of a system according to some embodiments of the invention.

In some embodiments, OS 115 includes any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. For example, OS 115 can be a commercial operating system, e.g., QNX or Linux.

In some embodiments, memory 120 is a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different, memory units. In some embodiments, memory 120 is a computer or processor non-transitory readable medium, or a computer non-transitory storage medium, e.g., RAM. Some embodiments may include a non-transitory storage medium having stored thereon instructions which when executed cause the processor to carry out methods disclosed herein.

Executable code 125 can be software, an application, a program, a process, task or script. A program, process, task, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein. In some embodiments, executable code 125 is executed by controller 105 possibly under control of operating system 115. For example, executable code 125 may be an application in a theft prevention unit.

Storage system 130 can be, or may include any storage unit, architecture, or hardware. For example, storage system 130 can be, or can include a hard drive or disk, a universal serial bus (USB) and the like. In some cases, computing device 100 is a server and storage system 130 is a solid-state drive (SSD) or hard disk drive.

I/O components 135 may be used for connecting (e.g., via included ports) or they may include: a mouse; a keyboard; a touch screen or pad or any suitable input device. I/O components may include one or more screens, touchscreens, displays or monitors, speakers, and/or any other suitable output devices. Any applicable I/O components may be included in, or connected to, computing device 100 as shown by I/O components 135, for example, a wired or wireless network interface card (NIC) or chip, a universal serial bus (USB) device or an external hard drive may be included in I/O components 135. Although vehicles such as cars are mainly discussed and/or referred to herein, other vehicles such as ships, trains and aircrafts are similarly applicable

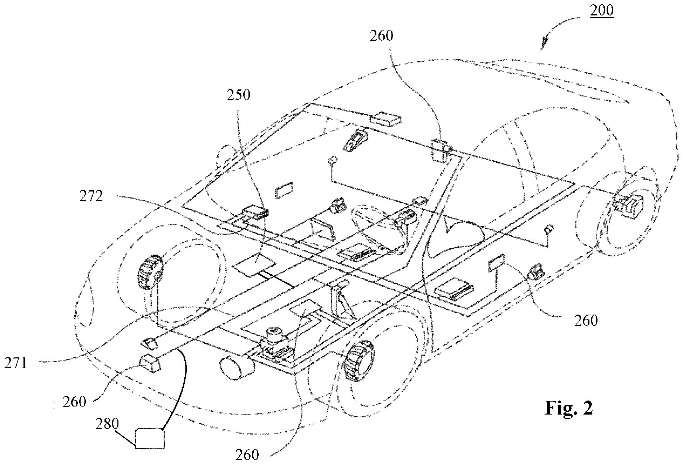

Reference is made to Fig. 2 which shows a system 200 according to illustrative embodiments of the present invention. As illustrated in Fig. 2, system 200 can be a car which includes a plurality of components, elements or units 260, each of which may be an electronic control unit (ECU) or it may be a sensor including a CPU, memory and communication elements etc. For the sake of simplicity and clarity, elements 260 are referred to herein as ECUs. For the sake of simplicity, system 200 is also referred to herein as vehicle 200 or as car 200.

For example, a first ECU 260 can be one that controls the braking system of car 200, a second ECU 60 can be one that controls the engine, a third ECU 260 can be one that controls the infotainment system of car 200 and a fourth 260 element can be an oil pressure sensor. ECUs 260 may be collectively referred to hereinafter as ECUs 260, or individually as ECU 260, merely for clarity and simplicity purposes. System 200 may be referred to herein as car 200 for simplicity, however, it will be understood that any relevant system can be applicable.

As further shown in Fig. 2, system 200 can include in-vehicle network 271 and in-vehicle network 272 which are used to enable ECUs 260 to communicate as well as enable ECUs 260 to control, and communicate with, components or elements in system 200. System 200 can include switch, hub or bridge 273 which connects networks 271 and 272. Switch, hub or bridge 273 can be a configurable device that can be configured to connect or disconnect networks 271 and 272, or it can be configured to selectively enable messages to propagate from one network to another. It will be understood that any number of networks such as networks 271 and 272 can be included in a system, e.g., interconnected by a number of switches, hubs or bridges 273.

For clarity, in-vehicle network 271 and in-vehicle network 272 are referred to herein as network 271 and network 272 respectively. For example, network 271 can be a high-speed control area network (CAN) bus enabling an ECU 260 to control the braking system of car 200 and network 272 can be a medium-speed CAN bus enabling an ECU 260 to control an infotainment system.

Networks 271 and 272 may be, may include, or may comprise any suitable bus or network infrastructure and can support any suitable protocols, e.g., in-vehicle networks 271 and 272 may be an Ethernet network, a CAN network or bus or a combination thereof. Components connected to networks 271 and 272, ECUs 260 may use any communication protocols or standards in order to communicate over networks 271 and 272. For example, protocols or standards such as internet protocol (IP), transmission control protocol (TCP), Scalable Service-Oriented MiddlewarE over IP (SOME/IP), Universal Measurement and Calibration (XCP), Diagnostics over Internet Protocol (DoIP) and Unified Diagnostic Services (UDS) may be used. Any other applicable protocols can be used without departing from the scope of the invention. For the sake of clarity and simplicity, numerous elements of networks 271 and 272 are implied but not shown, e.g., switches, routers, a gateway connecting these two networks etc. It will be recognized that embodiments of the invention are not limited by the nature of networks 271 and 272.

As further shown, system 200 includes a vehicle theft prevention (VTP) unit 250 which, as shown, is connected to an in-vehicle communication infrastructure. For example and as shown, VTP 250 is connected to both in-vehicle networks 271 and 272. VTP 250 can be, or it can include components of computing device 100 or parts thereof, e.g. VTP 250 typically includes a memory 120, a controller 105 and executable code 125 and an I/O component 135 enabling VTP 250 to physically sense networks 271 and 272, receive network transmissions, messages, frames or data packets from networks 271 and 272, process received messages or packets, store data and information in a storage 130 and send messages or packets over networks 271 and 272.

VTP 250 can be installed or included in a system at various stages or points in time. For example, VTP 250 can be included in a car by the manufacturer of the car or VTP 250 can be installed by an owner of the car, e.g., as an application or service on one of ECUs 260. Information used by VTP 250 as described herein, e.g., content signatures 401, hardware signatures 402, rules 403, context 404, configuration 405 and devices 406, can be saved, or included in VTP 250 at various stages or points in time. For example, objects in memory 121 can be stored therein by a manufacturer of a car, by an owner of the car are by a remote server.

Network transmissions, messages, frames and data packets may be collectively referred to hereinafter as transmissions, messages, frames and data packets, or individually as a transmission, a message, a frame and a packet, merely for clarity and simplicity purposes.

Device 280 may be any device, element or system used by a person (hereinafter perpetrator) trying to steal car 200, attempting to break into car 200, cause damage to car 200 or attempting or intending to make unauthorized use of car 200. Typically, device 280 is adapted to connect to an in-vehicle network, e.g., to at least one of networks 271 and 272. For example, a perpetrator may forcefully open a door, window or the trunk, or the perpetrator may remove a headlight assembly of car 200 to thus expose wires of network 272 and connect device 280 to network 272. Once connected to network 272, the perpetrator typically uses device 280 in order to send messages or packets over network 272, e.g., messages that can cause an ECU 260 to unlock doors of car 200 or start the engine of car 200. For example, using a device connected to an in-vehicle network, the perpetrator can send a message commanding the ECU 260 responsible for radio frequency (RF) key recognition & authentication to authenticate the perpetrator's key, or unlock doors of car 200, start the engine, or reprogram or duplicate a key. As described, such attempts can be identified and blocked by embodiments of the invention.

In other cases, the perpetrator may try to cause damage to car 200, e.g., install a virus, delete code or data or corrupt data which is required for proper operation of car 200.

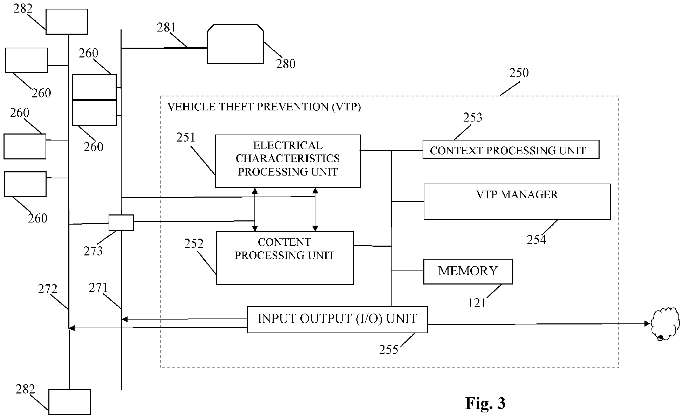

Reference is made to Fig. 3 which is a block diagram of elements of system 200 according to illustrative embodiments of the present invention. As shown, VTP 250 can be connected to a number of in-vehicle networks, buses or other communication infrastructures, e.g., VTP 250 is connected to in-vehicle networks 271 and 272 as described herein. As further shown, a plurality of components, elements or units 260 and agents 282 are connected to networks 271 and 272. As illustrated, using connection 281, a perpetrator has connected device 280 to network 271, for example, connection 281 can be a jack or socket which the perpetrator managed to access, an on-board diagnostic (OBD) or simply exposed wires of network 271.

As shown, VTP 250 includes an electrical characteristics processing unit 251 (referred to herein as unit 251), a content processing unit 252 (referred to herein as unit 252), a context processing unit 253 (referred to herein as unit 253), a VTP manager 254, a memory 120 and an input output (I/O) unit 255. For the sake of simplicity and clarity, VTP manager 254 is referred to herein as manager 254.

In embodiments, unit 251 and unit 252 are connected to in-vehicle networks such that they can sense and receive frames from each in-vehicle network independently or separately from other in-vehicle networks. For example and as illustrated, physically but separately connected to network 271 and to network 272, unit 251 can simultaneously sense, measure, identify and determine values and attributes of electrical signals such as voltage and/or current of, in or over network 271 and of network 272.

Generally, information exchanged between nodes over networks 271 and 272 is encoded into bits which are represented by voltage levels in wires or conductors of these networks. Different units or nodes 260 generate different transitions, fluctuations, waveforms, trends, patterns, characteristics or attributes of voltage changes when communicating over networks 271 and 272. For example, even if two similar or identical nodes connected to network 271 are made to send the exact same message, network packet or frame, the resulting patterns of voltage changes, signal imperfections and deviations, transitions or fluctuations of these two transmissions will be different. Accordingly, the hardware signatures (e.g., hardware signatures 402) calculated for the messages sent by the two similar or identical nodes will be different. A hardware signature can be created such that it is unique and can thus be used to verify a hardware source of a transmission, e.g., network packet or frame.

In embodiments, unit 251 measures electrical characteristics such as attributes or patterns of voltage changes, transitions or fluctuations which the transmitting nodes generate when transmitting messages, packets or frames over networks 271 and 271. For example, electrical characteristics such as maximal and minimal voltage levels, frequencies of voltage changes, rise and fall times of voltage transitions are measured by circuitry in unit 251, e.g., a low-pass filter (LPF), an analog to digital (A/D) converter and the like.

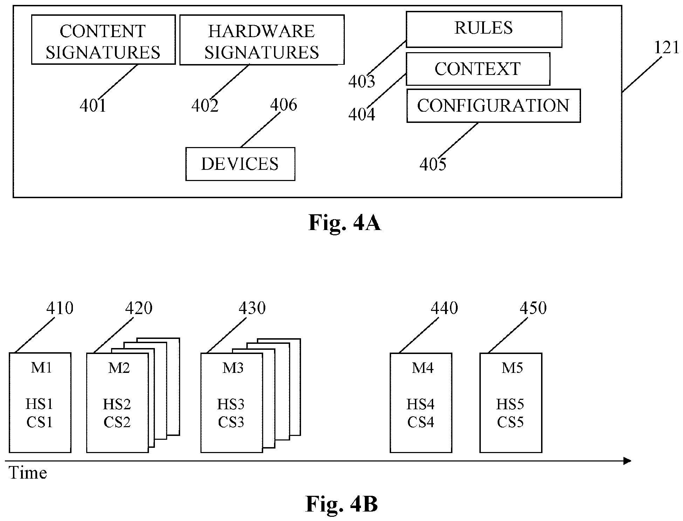

In embodiments, unit 251 analyzes transitions, fluctuations, waveforms, trends, patterns, characteristics or attributes of voltage changes, and generates, for each of a plurality of units, an identifying hardware signature. Since characteristics or attributes of voltage changes produced by production wise identical hardware components, a unique hardware signature can be created for each hardware component. Electrical or physical attributes or characteristics including frequencies, voltage levels, resistance, capacitance or any other measurable physical attributes or characteristics are characterized, described, identified, classified or represented in respective hardware signatures, e.g., hardware signatures 402 as described with reference to Fig. 4A.

For example, unit 251 calculates and/or generates a hardware signature for some or even all units 260 connected to networks 271 and 272. For example, a graph or waveform of voltage levels over time is generated or represented by unit 251 and features, attributes or characteristics of the graph are calculated and used to generate a hardware signature which specifically or uniquely identifies a specific hardware node 260 on a network. For example, features, attributes or characteristics which unit 251 identifies and/or calculates can include Fourier coefficients and amplitudes that are specific or unique to a specific ECU 260. Such coefficients and amplitudes can be used by unit 251 to calculate or generate a unique hardware signature for each specific ECU 260. It is noted that a signature generated as described matches any transmission of the associated unit 260 regardless of the content or length of the transmission. Once created, a hardware signature is used for matching and/or validating transmissions, e.g., by manager 254 as further described herein.

Unit 251 can sense, measure, identify and determine physical characteristics, attributes and values of, or related to networks 271 and 272. For example, unit 251 can be equipped or adapted to measure and determine the capacitance, resistance, conductance or continuity of network 272. For example, a connection of device 280 may cause a sudden surge or change in capacitance or voltage in a system which can be sensed by unit 251. In embodiments, unit 251 cooperates with agents 282 in order to measure and determine physical characteristics and attributes of in-vehicle networks. For example, the voltage drops across network 271 can be continuously or periodically measured by agents 282 connected to end points of network 271, periodic messages (e.g., TCP ping messages) exchanged between unit 251 and agents 282 can be used such that if in order to connect device 280 the perpetrator (even temporarily) physically disconnects portions of network 272 such disconnections can be identified by unit 251.

In embodiments, unit 252 analyzes, processes and records information related to the content of messages, packets or frames exchanged over networks 271 and 272. Unit 252 mainly operates at the logical level of transmissions, e.g., network protocols and headers and payload of messages. For example, unit 252 examines, analyzes and processes headers of frames, thus identifying source and destination of a frame, a frame's length and other information or metadata. Unit 252 is further adapted to examine, analyze and process the content or payload of messages, packets or frames.

In embodiments, unit 252 tags, classifies, organizes, sorts or categorizes messages according to their content. For example, during a learning mode session, unit 252 creates and records content signatures which can be used to match or identify frames, messages or packets which include same or similar content or payload. For example, a set of values in a respective set of portions of a header (e.g., network protocol, source/destination address or port, or a value in an offset in the payload) can be used for creating a content signature. For example, based on some content similarity between a set of messages from an ECU 260 which controls the head lights of car 200, unit 252 creates a content signature which will match future messages from the head lights ECU. A content signature as referred to herein can include a plurality of fields related to (or identifying) a plurality of portions of a frame or packet. Accordingly, using a content signature, complex rules can be used to match or process an incoming frame. Unit 252 can obtain and record, e.g., in a content signature, information identifying hardware elements, e.g., media access control (MAC) addresses or other information identifying an Rx/Tx hardware component. For example, e.g., such hardware related information is received from unit 251 and included in a content signature. Once created, a content signature is used for matching and/or validating transmissions, e.g., by manager 254as further described herein.

In embodiments, unit 253 determines the context or state of vehicle 200. A context may be determined, by unit 253, based on an operating state of a vehicle and/or circumstances under which the vehicle is operating.

For example, unit 253 can receive (e.g., via unit 251) messages, frames or packets from network 271, determine based on the received messages whether vehicle 200 is stationary or is in transit, or determine vehicle 200 is in service, whether or not the engine is running and so on. Unit 253 can receive information from any source, e.g., from an owner or driver of vehicle 200 or from the Internet. Once determined, a context is used for matching and/or validating transmissions, e.g., by manager 254 as further described herein. The term "context" is used herein means or relates to any data or information describing a context, accordingly, logic and rules in a system can be based on the context of a vehicle.

Memory 121 in VTP 250 can be or can include components of memory 120 in computing device 100. For example, memory 121 can be a flash memory, RAM etc. In some embodiments, memory 121 can be external to VTP 250, e.g., connected to network 272 and read/write operations as described can be done over network 272. manager 254 and all other units in VTP 250 can write data to memory 121 as well as read data from memory 121.

For example, hardware signatures and logical signatures are stored, by units 251 and 252 respectively, in memory 120 and are then examined and processed by manager 254. Similarly context information is written to memory 121 and is thus available to manager 254. Commands and rules can be written to, and read from memory 121, accordingly, manager 254 can control operations of units 251, 252 and 253. For example, configuration data such as rules and thresholds are written to memory 121 by manager 254, and the configuration data is then read and applied by units 251, 252 and 253.

Manager 254 uses information received from unit 251, unit 252 and unit 253 to determine that an unauthorized device is physically connected to in-vehicle network 271 and/or to in-vehicle network 271. As further described, manager 254 can additionally identify, discover, determine, record and report valuable information. For example, manager 254 can determine, record and report what the user of the unauthorized device (perpetrator) is attempting to do, which element or subsystem the perpetrator is targeting or attacking etc.

I/O unit 255 can send messages or packets over networks 271 and 272. For example, using, or via I/O unit 255, manager 254 sends messages over networks 271 and 272. Similarly, units 251, 252 and 253 can send messages using I/O unit 255. As illustrated, I/O unit 255 can be adapted to send and receive messages from external sources, e.g., the internet, other

Reference is made to Fig. 4A which is a block diagram of elements included in memory 121 according to illustrative embodiments of the present invention. As shown, memory 121 in VTP 250 can include content signatures 401, hardware signatures 402, rules 403, context 404, configuration 405 and devices 406. In embodiments, content signatures 401 include a plurality of content signatures, e.g., learned by processing unit 252 during a learning or training stage. Content signatures 401 can include predefined content signatures, e.g., downloaded from a server or otherwise installed. Hardware signatures 402 can include a plurality of hardware signatures, e.g., learned by processing unit 251. Content signatures 401, hardware signatures 402 and rules 403 may be collectively referred to hereinafter as content signatures 401, hardware signatures 402 and rules 403, or individually as a content signature 401, a hardware signature 402 and a rule 403, merely for clarity and simplicity purposes.

Content attributes or characteristics including values and strings in header fields, as well as any value, string or portions of a message are characterized, described, identified, classified or represented in respective content signatures, e.g., content signatures 401 as described with reference to Fig. 4A.

In embodiments, content signatures are associated with hardware signatures. For example, a hardware signature of a specific ECU 260, e.g., one reporting engine heat, is associated with a content signature of messages received from the specific ECU. Accordingly, rules and logic used for processing packets or frames can be based on the hardware source of messages as well as any information included in the messages.

Rules 403 typically include configuration and other data used for processing frames or packets. For example, logic applied by manager 254 is based on pointers, values, thresholds and operations in rules 403. Context 404 includes context information as described. When processing an incoming frame, rules 403 can be related to, or depend on information in any one of content signatures 401, hardware signatures 402 and context 404. Information objects shown in Fig. 4A can be stored in multiple memory 121 components, e.g., rules 403 can be stored in RAM and hardware signatures can be stored in a flash memory stick or element.

Devices 406 can be a list, table, set of objects or any other structure in memory 121. Devices 406 can include a set of data entries which identify, classify and describe a respective set of devices connected to an in-vehicle network. For example, devices 406 includes, for a set of ECUs 260 in system 200, a respective set of hardware signatures 402, content signatures 401, and metadata. For example, metadata in devices 406 can include information obtained from a manufacturer of an ECU 260, or obtained from the ECU 260, e.g., model, version, serial number and the like and one or more content signatures 401 which can be used to identify the device based on messages it sends. In other cases metadata in devices 406 can include information which DU 250 collects, receives or generates, e.g., during a learning or training phase. For example, since the messages an ECU 260 which controls the Air Conditioning (A/C) system in a car 200 are known (e.g., to the manufacturer of the A/C ECU 260), a reference content signature 401 of such ECU 260 can be created in advance and can be included in devices 406 in car 200. A reference content signature 401 can be used to identify or classify devices based on the messages they send. Accordingly, by matching content signatures 401 generated, e.g., by unit 252 in VTP 250, with reference content signatures 401 in devices 406, VTP 250 identifies ECUs 260 in system 200, e.g., associates ECUs 260 with a type, class, manufacturer, name, model or serial numbers etc. Metadata in devices 406 can indicate the state of the ECU 260, e.g., the ECU is operational, resetting, faulty etc.

Reference is made to Fig. 4B which graphically shows a set of messages as received over time according to illustrative embodiments of the present invention. In operation, when a network frame or packet is received by VTP 250, hardware and content signatures are calculated or generated for the incoming (received) message, e.g., by units 251 and 252 as described.

For example, along a timeline shown in Fig. 4B, message M1 410 is received first and a hardware signature HS1 and a content signature CS1 are calculated for and associated with message M1. Similarly, hardware signature HS2 and a content signature CS2 are calculated for and associated with message M2 and so on. The hardware and content signatures are then used, in combination with more rules 403 for processing the incoming message. For example, signatures calculated for messages such as HS 1 and CS 1 are related to or matched with signatures in devices 406 or configuration 405 as described.

In embodiments, a method of protecting a vehicle from theft includes monitoring transmissions over an in-vehicle network. For example, VTP 250 monitors transmissions over networks 271 and 272, e.g., using promiscuous mode as known in the art, such that any frame, message or data packet transmitted over networks 271 and 272 is received by units 251, 252 and/or manager 254. In embodiments, VTP 250 determines, based on the content of a message, electrical characteristics of the transmission of the message, and based on the context of a vehicle, that an unauthorized device is connected to the in-vehicle network.

For example, hardware signature HS3 calculated for message M3 is unknown to unit 251 or to manager 254, e.g., it cannot be found in devices 406, for example, because message M3 was sent by device 280. In addition, context 404 does not indicate a state or context in which unknown devices are allowed to connect to the vehicle's networks. In such a case, manager 254 determines message M3 was sent by an unauthorized device.

In embodiments, VTP 250 determines what an unauthorized device which was connected to an in-vehicle network is used for. For example, VTP 250 can identify or determine device 280 is being used for stealing vehicle 200 or it is used for bypassing a security or access system of vehicle 200. For example, based on repeated attempts by device 280 to provide credentials, e.g., device 280 randomises PIN codes or passwords in an attempt to access a resource, VTP 250 determines device 280 is used for bypassing a security or access system of car 200. For example, based on the hardware signature of one or more messages sent by device 280 and further based on the content of these messages and further based on the context of vehicle 200, VTP 250 determines the user of device 280 is attempting to steal car 200.

If VTP 250 identifies or determines that an unauthorized device was connected to a protected system's network, then VTP 250 performs one or more actions. For example, VTP 250 records and reports the event, e.g., VTP 250 records and reports the date/time device 280 was connected to network 271, hardware information of device 280, e.g., MAC address, the geographic location of car 200, the context and state of car 200, messages sent by device 280 and so on. In embodiments, VTP 250 proactively acts when an unauthorized device is connected to one of networks 271 and 272. For example, VTP prevents or mitigates an attack on the vehicle 200 and/or prevents theft or any unauthorized use of the vehicle 200. For example, VTP 250 can prevent device 280 from communicating over network 271, or VTP 250 can activate or deactivate some of ECUs 260 to thus prevent device 280 from operating as intended.

In embodiments, VTP 250 calculates, based on electrical characteristics of transmissions over an in-vehicle network, a set of hardware signatures 402 for a respective set of components connected to the in-vehicle network. For example, hardware signatures 402 are calculated by VTP 250. VTP 250 can determine that the unauthorized component is physically connected to an in-vehicle network. For example, VTP 250 determines device 280 is physically connected to network 271 based on relating electrical characteristics of a transmission from device 280 to a set of signatures. For example, if a hardware signature 402, e.g., HS5 calculated for message M5 does not match any of the hardware signatures 402 in devices 406 or in hardware signatures 402 then VTP 250 determines that message M5 was sent by a device which is physically connected to network 271 and may well be an unauthorized and/or malicious device or component connected to network 271.

In embodiments, VTP 250 determines the electrical characteristics of a transmission at least partially match electrical characteristics represented by a signature and updates the signature according to the electrical characteristics of the transmission. For example, although messages 410 M1, 420 M2 and 430 M3 all come from the same source ECU 260, while hardware signatures HS1 and HS2 (of M1 and M2) match a specific hardware signature 402, hardware signature HS3 of message M3 only partially matches the specific hardware signature 402. If hardware signature HS4 of message M4 also only partially matches the specific hardware signature 402, and possibly matches HS3, then VTP 250 may modify the specific hardware signature 402 in devices 406 since it is likely that the physical layer connecting VTP 250 and the source ECU 260 has slightly changed, e.g., due to wire degradation.

For example, electrical characteristics of messages from the same, specific ECU 260 (which are characterized by a specific hardware signature 402) may be similar but not identical. For example, electrical characteristics such as frequencies, or voltage levels may gradually change due to temperature changes, or wire degradation. Generally, VTP 250 continuously or periodically modifies or updates hardware signatures 402 thus adapting to small changes. Accordingly, VTP 250 can continuously generate and update signatures. VTP 250 can update or modify hardware and software signatures in devices 406 based on a time interval, a command or an event.

In embodiments, VTP 250 creates hardware signatures 402 based on previously unseen electrical characteristics of one or more transmissions. For example, a command received by VTP 250, e.g., via I/O unit 255 and from a server or from a tool connected to an OBD port, causes VTP 250 to commence or assume learning mode or one of diagnostic, auto-discovery or service modes of operation. For example, in learning mode, VTP 250 creates hardware signatures 402 based on transmissions, e.g., by iteratively modifying a specific hardware signature 402 until it matches messages originating at a specific ECU 260. Accordingly, VTP 250 can learn, calculate, store, provide and use signatures hardware signatures 402, e.g., when a new ECU 260 is connected to network 272 by an owner of car 200 or in a service station. In another aspect, VTP 250 can continuously or periodically update existing hardware signatures 402 in devices 406, e.g., in order to adapt to physical or environmental changes in or around car 200.

In embodiments, VTP 250 determines an unauthorized component connected to an in-vehicle network is malicious based on a state or context of the vehicle. For example, if car 200 is parked (not moving), or its engine is off then an unauthorized component connected to an in-vehicle network is more likely to be malicious than an unauthorized component connected to an in-vehicle network while car 200 is moving sixty miles an hour.

The context of car 200 can include, reflect or indicate whether or not the owner of car 200 is in, or near car 200. For example, if the context or state of car 200 indicates the owner of car 200 is not in, or even near car 200, e.g., the owner's device is not connected over Bluetooth to a telematics system of car 200, then VTP 250 decides unauthorized component 280 connected to network 271 is malicious. In another example, if context 404 indicates car 200 is locked then an unauthorized component connected to an in-vehicle network is more likely to be malicious than if car 200 is unlocked. Of course, VTP 250 takes into account not only the context 404, for example, a decision of whether or not an unauthorized component connected to an in-vehicle network is malicious is based on one or more rules 403, information in configuration 405 and in devices 406 and other aspects as described. Data in context 404 is typically used, by VTP 250, in combination with other elements or aspects, e.g., signatures' matches, sequences of messages etc.

In embodiments, VTP 250 determines the unauthorized component is malicious based on examining messages sent by the unauthorized component and identifying operations the unauthorized component attempts to perform. For example, by comparing headers and content of messages coming from device 280 with a set of predefined messages in configuration 405, VTP 250 can identify or determine which specific messages device 280 is sending, which ECU 260 these messages are addressed to, and what these messages are designed to cause. For example, VTP 250 decides device 280 is malicious based on identifying a specific sequence of messages, e.g., message M2 from device 280 is an attempt to unlock doors of car 200 and/or that message M3 is a command to start the engine and so on.

In embodiments, VTP 250 determines the unauthorized component is malicious based on a sequence of messages. For example, content signatures 401 can include descriptions or characteristics of sequences of messages, e.g., a sequence that involves a command to start the engine of car 200 typically involves unlocking doors of car 200, punching in a security code and only then starting the engine. In another example, VTP 250 notes and records a sequence of diagnostic messages sent while the engine of a car is off. In yet another case, a command to open the doors appearing before a key was identified is flagged, recorded or acted upon as described..

In some embodiments, configuration 405 includes message sequences that identify attacks, e.g., known attacks who've been analyzed to identify specific message sequences and operations used by a specific attack when launched. By matching messages from device 280 with sequences in configuration 405 which identify attacks VTP 250 can identify an attack and even predict operations device 280 will attempt to perform.

In embodiments, VTP 250 prevents an unauthorized component from communicating over a network. For example, to prevent device 280 from communicating over networks 271 and 272, VTP 250 blocks, corrupts or disrupts messages sent from device 280, e.g., VTP 250 modifies a cyclic redundancy check (CRC) value in messages sent by device 280 or uses other techniques for corrupting, disrupting or blocking messages originating at device 280. For example, to prevent device 280 from communicating over networks 271 and 272 VTP 250 floods device 280 with redundant messages or VTP 250 commands some ECUs 260 to ignore or discard messages coming from device 280. In another example, VTP 250 configures bridge 273 such that it blocks messaged from device 280 to propagate over network 272, or VTP 250 causes or commands an ECU 260 to assume safe or other mode which can protect the ECU 260 from device 280.

In embodiments, VTP 250 controls or activates a component in a vehicle to thus protect the vehicle from an unauthorized component. For example, upon determining an unauthorized and malicious device has been connected to network 271, VTP 250 sends a message to an ECU 260 which controls the ignition of the engine of car 200 causing the ECU 260 to prevent starting the engine. Upon determining an unauthorized and malicious device has been connected to an in-vehicle network, VTP 250 can activate or sound the alarm, even if the alarm has been deactivated, e.g., by sending a command to the relevant ECU 260. For example, even if device 280 was used to deactivate an alarm system of car 200, by communicating with the relevant ECU 260, VTP 250 activates or reactivates the alarm system.

In embodiments, VTP 250 configures or controls network infrastructure elements in a vehicle to thus protect the vehicle from an unauthorized component. For example, having identified malicious device 280 was connected to network 271, VTP 250 configures, or reconfigures bridge 273 to selectively prevent passage of network packets or messages from network 271 to 272.

In some cases, VTP 250 sends messages to the ECUs responsible for car security or protection, e.g., a door control module, body control module, smart-key access systems unit or other ECUs. For example, a message or command sent by VTP 250 can disable an application in a first ECU 260, cause a second ECU 260 assume lockdown or sleep mode, cause a third ECU 260 to ignore specific messages, or cause an ECU to activate an alarm, activate an immobilizer or a location service, call an owner of car 200 and so on.

As described, devices 406 can include, for some or even all of ECUs 260, a full description. Different types of ECUs 260 may be internally tagged, classified or otherwise identified. Association of content signatures 401 with hardware signatures 402 as described enables VTP 250 to actually know who or what is each of ECUs 260. Accordingly, rules 403 can be based on ECUs attributes, types or classes, e.g., a first rule 403 can be related to a telematics ECU 260, a second rule can include commands sent to the doors ECU 260 and other commands sent to the alarm ECU 260 and so on. For example, a rule dictating that the ECU controlling the ignition (which may be internally identified as "ECU17A") is to be disabled can be carried out by VTP 250 since an ECU with a type of ECU17A appears in devices 406. For example, the ECU with a type of ECU17A appears in devices 406 because it was preinstalled therein or because VTP 250 identified that the content signature 401 of one of ECUs 260 matches a reference content signature 401 in devices 406 and based on the match, VTP 250 has added an entry for ECU17A in devices 406.

In embodiments, VTP 250 validates, based on a signature of a component, messages appearing to originate from the component indeed originate from the component. Otherwise described, VTP 250 validates the hardware source of a message. For example, to validate the hardware source of message M4, VTP 250 checks and verifies that hardware signature HS4 and content signature CS4 match respective hardware signature 402 and content signature 401 in an entry in devices 406. If the CS4 matches a content signature 401 in an entry in devices 406 but HS4 does not match the hardware signature 402 in the entry, then VTP 250 determines an unauthorized device connected to the in-vehicle network is trying to mimic or impersonate one of ECUs 260. For example, message M5 was sent by device 280 in an attempt to retrieve information required in order to duplicate, activate or encode a key for car 200, while CS5 may match the content signature 401 of a specific ECU 260 in devices 406, HS5 does not match the corresponding hardware signature 402 of that ECU 260 since HS5 is a hardware signature of device 280.

In embodiments, reference hardware signature 402, reference content signatures 401, manufacturer details and information, description or any other information is received from a remote server, e.g., via I/O unit 255 and from a server connected to the internet. For example, after a software update of one of ECUs 260, a new reference content signature 401 for the updated ECU 260 can be downloaded or received from a remote server and included in devices 406.

In embodiments, VTP 250 determines that an unauthorized component connected to an in-vehicle network is used to perform at least one of: unlocking a door of the vehicle and starting the engine of the vehicle. For example, VTP 250 identifies and records that messages M2 420 and M4 440 were sent by device 280 and that message M2 commands an ECU 260 to unlock the doors of car 200 and that message M4 commands and ECU to start the engine of car 200.

In embodiments, VTP 250 determines an unauthorized component is connected to the in-vehicle network based on matching content of a message with a signature of a component. For example, if the hardware signature HS2 of message M2 matches a hardware signature 402 in an entry in devices 406 and content signature CS2 matches the content signature 401 in the same entry then VTP 250 determines that message M2 has been validated and is valid and safe. In embodiments, VTP 250 calculates a hardware signature for all messages obtained from an in-vehicle network and VTP 250 uses the calculated hardware signature to validate each and every message in an in-vehicle network thus providing on-going, continuous validation of communications over an in-vehicle network.

It will be noted that matching hardware aspects of a source of a message with the content sent by the source can detect attacks which do not necessarily include physical connection to an in-vehicle network. For example, a hacker gains control of the ECU 260 which controls the headlights and causes it to send a command message M3 which the headlights ECU 260 does not normally send. For example, message M3 is a command to unlock the doors, a command which is never sent from the headlights ECU 260. While hardware signature HS3 will match a hardware signature 402 in the entry of the headlights ECU 260 in devices 406, the content signature CS3 will not match the content signature 401 in headlights ECU 260's entry since it never sends commands to the doors, such hardware-content mismatch can cause VTP 250 to determine the headlights ECU has been attacked or compromised. Accordingly, VTP 250 can validate messages based on an association of hardware and content aspects.

In embodiments, based on at least one of: a command, a configuration element, an event, and a state or context of the vehicle, VTP 250 may perform at least one of: authenticate an unauthorized component, ignore an unauthorized component, remove a hardware or content signature, create a hardware and/or content signature representing a new component, and calculate or recalculate a hardware and/or content signature for a component.

For example, when in learning or training mode, VTP 250 adds an entry in devices 406 including therein a hardware signature 402 and a content signature 401 of a newly, yet unauthorized, connected ECU 260 thus authenticating the ECU 260. In another case, VTP 250 ignores messages from unauthorized ECUs, e.g., in ignore mode in a service station. Based on a command, VTP 250 can remove a hardware signature 402 or a content signature 401 from devices 406, e.g., when an ECU 260 is removed from car 200. VTP 250 can create a hardware and/or content signature representing a new component, e.g., in a new entry in devices 406 as well as recalculate or update hardware and content signatures in devices 406.

VTP 250 can operate according to a context mode or state, for example, based on information in context 404 which unit 253 stores therein. For example, context 404 can indicate that car 200 is in authentication or inactive context, e.g., to allow a technician to connect an external diagnostic device. A context can be re-learning context, state or mode, e.g., in case a technician replaces an ECU and signatures need to be re-learned. A specific context can be stored in context 404 when car 200 is in a garage or service station, another specific context can be set for diagnostics purposes and so on. A context can be set, e.g., in contexts 404 by unit 253, by manager 254, by a diagnostic device (e.g., connected to an OBD port), or by a remote entity, e.g., by a server via a telematics unit in car 200.

Operational modes can be entered or assumed by VTP 250 automatically, e.g., based on a state or context of car 200, based on a command or based on messages received from ECUs 260. For example, the context or state of vehicle 200 is determined or calculated by unit 253 and recorded in context 404 based on vehicle speed, tire pressure, vehicle load, road grade, traction, ambient temperature, humidity or season.

A context can be identified, determined or set, e.g., by unit 253, based on a procedure. For example, the procedure needed for duplicating a key typically involves exchange of information such as passwords, identifying numbers or PIN codes and so on, such a procedure can be identified, e.g., by unit 253 as a context and VTP 250 can operate according to the identified context. Rules in rules 403 can be related to contexts. For example, VTP 250 does not act on messages related to duplicating a key when context 404 indicates a legitimate key duplication procedure is under way.

While hardware signatures 401 typically remain unchanged when a context is identified or set as described, content signatures 401 can change according to data in context 404. For example, a specific ECU 260 is expected to send specific content which matches a specific content signature 401 when system 200 operates according to a specific, first context, but the specific ECU 260 is expected to send different messages with different content when system 200 operates according to a different, second context. In embodiments, content signatures 401 includes, for a specific one ECU 260, multiple content signatures 401 which are used in a respective multiple contexts.

Accordingly, VTP 250 can validate messages based on the context of car 200. Such capability enables VTP 250 to identify an ECU 260 has been compromised, e.g., when a perpetrator has gained access to, and control of the compromised ECU 260 and causes the ECU 260 to send messages it is not expected to send under a specific context.

Hardware and content signatures in devices 406 can be context dependent. For example, a first content signature 401 in devices 406 can be used, for a specific ECU 260, when car 200 is parked (a first context or state), a second, different content signature 401 of the same ECU 260 is used when the engine is turned off, and a third content signature 401 is used when car 200 doing 60 mph on a highway. In another case, a rule 403 can dictate that when car 200 is in a specific context, a specific ECU 260 is not expected to send any messages or be otherwise active. A message received from the specific ECU 260 when car 200 is in the specific context can cause VTP 250 to determine an attack is under way or that car 200 is at risk. Accordingly, VTP 250 can identify a threat based on the hardware source of messages and regardless of the content of a message. In some cases VTP 250 identifies an attack regardless of context. For example, normally, the ECU 260 which controls the infotainment system in car 200 does not send messages which cause or initiate starting the engine of car 200, accordingly, a message sent by the infotainment ECU 260 which commands another ECU 260 to start the engine will be identified by VTP 250 is requiring an action, e.g., since the content signature 401 calculated for the message will not match the content signature 401 stored for the infotainment ECU 260., e.g., in devices 406.

In yet another case, a rule 403 can dictate that when car 200 is in a specific context, a specific ECU 260 is expected to send one or more messages or be otherwise active. Failing to receive any message from the specific ECU 260 when car 200 is in the specific context can cause VTP 250 to determine an attack is under way or that car 200 is at risk. Accordingly, VTP 250 can identify a threat based on the context and the behavior of a specific hardware source of messages, possibly regardless of the content of messages. At any point where or when VTP 250 identifies a security threat or risk VTP 250 may act. For example, VTP 250 records information related to a risk or threat, alerts a user and controls components in system 200. For example, VTP 250 can restart an ECU 260, block messages from a device connected to an in-vehicle network, communicate with a remote computer and so on.

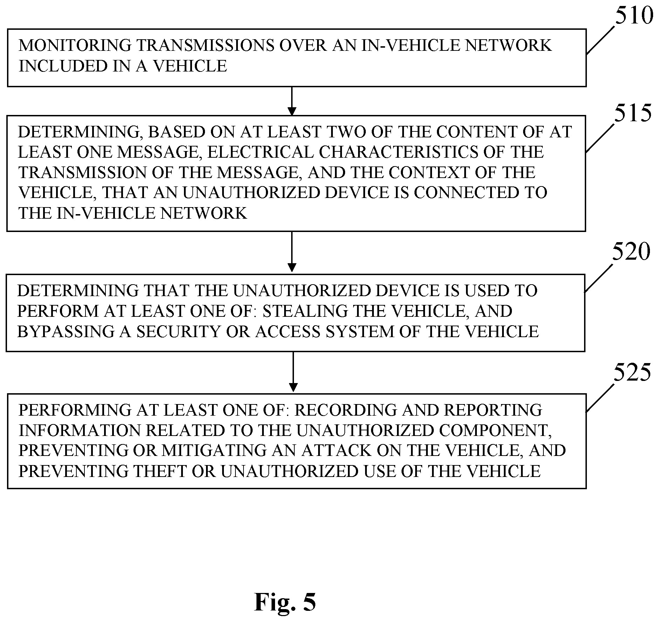

Reference is made to Fig. 5, which shows a flowchart of a method according to illustrative embodiments of the present invention. As shown in block 510, a method according to embodiments of the invention includes monitoring transmissions over an in-vehicle network. For example, any frame, message or data packet transmitted over networks 271 and 272 is received by VTP 250, e.g., using promiscuous mode as described.

As shown in block 515, a method includes determining, based on at least two of the content of at least one message, electrical characteristics of the transmission of the message, and the context of the vehicle, that an unauthorized device is connected to the in-vehicle network. For example, VTP 250 identifies and determines device 280 is connected to network 271 as described.

As shown in block 520, a method includes determining that the unauthorized device is used to perform at least one of: stealing the vehicle, and bypassing a security or access system of the vehicle. For example, an attempt to steal car 200 or bypass a security or access system is identified by VTP 250 based on repeated attempts to access a resource, or based on specific commands or messages sent to specific ECUs 260 as described.

As shown in block 525, a method includes performing at least one of: recording and reporting information related to the unauthorized component, preventing or mitigating an attack on the vehicle, and preventing theft or unauthorized use of the vehicle. For example, VTP 250 disrupts messages sent by device 280, prevents device 280 from accessing network 272 and so on.

In the detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method of protecting a vehicle from theft, the method comprising:
monitoring transmissions over an in-vehicle network;
determining, based on at least two of the content of at least one message, electrical characteristics of the transmission of the message, and the context of the vehicle, that an unauthorized device is connected to the in-vehicle network and is used to perform at least one of:
stealing the vehicle, and
bypassing security or access system of the vehicle; and
performing at least one of:
recording and reporting information related to the unauthorized component,
preventing or mitigating an attack on the vehicle, and
preventing theft or unauthorized use of the vehicle.

2. The method of claim 1, comprising:
calculating, based on electrical characteristics of transmissions over the in-vehicle network, a set of signatures for a respective set of components connected to the in-vehicle network;
wherein determining an unauthorized component is connected to the in-vehicle network is based on relating electrical characteristics of a transmission to the set of signatures.

3. The method of claim 1 or 2, comprising:
determining electrical characteristics of a transmission at least partially match electrical characteristics represented by a signature; and
updating the signature according to the electrical characteristics of the transmission.

4. The method of claim 1, comprising creating a signature based on previously unseen electrical characteristics of one or more transmissions.

5. The method of any one of the preceding claims, wherein determining the unauthorized component is malicious is based on a state of the vehicle.

6. The method of any one of the preceding claims, wherein determining the unauthorized component is malicious is based on examining messages sent by the unauthorized component and identifying operations the unauthorized component attempts to perform.

7. The method of any one of the preceding claims, comprising preventing the unauthorized component from communicating over the network.

8. The method of any one of the preceding claims, comprising controlling or activating a component in the vehicle to thus protect the vehicle from the unauthorized component.

9. The method of any one of the preceding claims, comprising, based on matching the content of a message with a signature of a component, determining one of:
a message appearing to originate from the component was indeed sent by the component, and
an unauthorized component is connected to the in-vehicle network.

10. The method of any one of the preceding claims, wherein the signatures are received from a server.

11. The method of any one of the preceding claims, comprising determining the unauthorized component is used to perform at least one of: coding a key, unlocking a door of the vehicle and starting the engine of the vehicle.

12. The method of any one of the preceding claims, comprising determining the unauthorized component is physically connected to the in-vehicle network.

13. The method of any one of the preceding claims, comprising, based on at least one of: a command, a configuration element, an event, and a state or context of the vehicle, performing at least one of:
authenticating the unauthorized component,
ignoring the unauthorized component,
removing a signature,
creating a signature representing a new component, and
calculating or recalculating a signature for a component.

14. A system comprising a data processing circuit configured to execute a method according to any one of the claims 1 to 13.

15. A computer program comprising instructions which, when the program is executed by a computer, cause the computer to carry out a method of any one of the claims 1 to 13.
